# EUROPÄISCHE PATENTSCHRIFT

(11) **EP 0 939 729 B1**
(45) Veröffentlichungstag und Bekanntmachung des Hinweises auf die Patenterteilung: **05.03.2003**
(21) Anmeldenummer: 97912158.9
(22) Anmeldetag: 09.10.1997
(51) Int. Cl.: B65B 7/18, B65B 55/00

(54) **VORRICHTUNG ZUM VERSIEGELN VON ASEPTISCH BEFÜLLTEN PACKUNGEN UNTER KEIMFREIEN BEDINGUNGEN**
DEVICE FOR SEALING ASEPTICALLY FILLED PACKAGES UNDER STERILE CONDITIONS
DISPOSITIF DE SCELLAGE POUR EMBALLAGES A REMPLISSAGE ASEPTIQUE DANS DES CONDITIONS STERILES

(30) Priorität: 19.11.1996 DE 19647775
(43) Veröffentlichungstag der Anmeldung: 08.09.1999
(73) Patentinhaber: Tetra Laval Holdings & Finance SA, 1009 Pully (CH)
(72) Erfinder: MARTIN, Peter, Josef, D-65205 Wiesbaden (DE)
(74) Vertreter: Weber, Dieter, Dr. Dipl.-Chem.
(86) Internationale Anmeldenummer: EP9705568
(87) Internationale Veröffentlichungsnummer: WO98022345

(56) Entgegenhaltungen:
- DE-A- 1 586 282
- FR-A- 2 305 346

## Beschreibung

Die Erfindung betrifft eine Vorrichtung zum Versiegeln der Verschlußnaht einer keimfrei befüllten Packung aus mit Kunststoff beschichtetem Trägermaterial, zum Beipiel Papier, unter keimfreien Bedingungen in einem Reinraum, bei der in Bewegungsrichtung eines Siegelbackens hinter letzterem ein Antrieb mit diesem gekoppelt und stationär an einem Halterahmen angebracht ist und vor dem Siegelbacken in Bewegungsrichtung fest ein Gegenbacken am Halterahmen angebracht ist.

Es sind zahlreiche Versiegelungsvorrichtungen zum Verschließen der Naht an einer Giebelpakkung aus mit Kunststoff beschichtetem Papier bekannt, bei denen aber nicht in einem Reinraum versiegelt wird. Andere Versiegelungsvorrichtungen verschweißen die Giebelpackung dadurch mit Heißluft, daß man die miteinander zu verbindenden Nahtflächen mit Heißluft beaufschlagt, um die betreffenden Flächen heiß und schweißfähig zu machen. Diese Heißluft ist aber nicht keimfrei, und man kann auch nicht das gesamte System wie bei einem Sterilraum kapseln, weil sich die Einrichtungen und einige Bereiche in dem Reinraum erheblich überhitzen würden. Für den Transport der Heißluft werden Strömungen erzeugt, die zu erheblichen Turbulenzen führen, wodurch wiederum keimhaltige Luftströme teilweise sogar in die aseptisch befüllte Packung hineinströmen und das Innere der Packung dadurch unsteril machen. Außerdem haben Heißluftdüsen viele enge Kanäle und Ecken, die man nicht einwandfrei sterilisieren bzw. keimfrei machen kann. Aus diesen Heißluftdüsen kommende Luft ist mit Nachteil immer in gewissem Grade verseucht.

Bei anderen nicht aseptischen Füll- und Verschließmethoden für Lebensmittelpackungen werden Kurvensteuerungen und mittels Hebeln und Lagern bewegbare mechanische Systeme eingesetzt. Bei diesen sind aber Schmiermittel unerläßlich, die wiederum eine nicht aseptische Atmosphäre bedingen.

Aufgabe der Erfindung ist daher die Schaffung einer Vorrichtung der eingangs genannten Art, bei welcher unter Gewährleistung hoher Produktionssicherheit der Antrieb für die Siegelvorrichtung ohne ein hermetisch geschlossenes Sondergehäuse unter keimfreien Bedingungen arbeiten kann und die Vorrichtung wartungsfreundlich ist.

Gemäß der Erfindung wird diese Aufgabe dadurch gelöst, daß sowohl die Vorrichtung zum Endversiegeln unter keimfreien Bedingungen mit Siegelbacken und Gegenbacken als auch der Antrieb in einem Reinraum angeordnet sind und der Antrieb einen Hydraulikzylinder aufweist, der mit keimfreiem Wasser als Hydraulikflüssigkeit betrieben ist und doppelt wirkend arbeitet. Zylinder mit Kolben und keimfreiem Wasser als Hydraulikflüssigkeit sind an sich für Antriebe bekannt. Bei derartigen Einrichtungen handelt es sich aber niemals um Bearbeitungen in einem Reinraum oder sterilem Raum. Schon die bei der bekannten Hydraulik verwendeten Materialien und die damit zusammenhängenden Schmierverfahren lassen einen Hydraulikantrieb in einem Reinraum nicht zu. Der Fachmann für die Herstellung von keimfrei befüllten Packungen weiß, daß das Lebensmittelgesetz im In- und Ausland die Verwendung von Hydraulikflüssigkeiten neben einer keimfrei befüllten Packung verbietet. Nahezu alle Teile und Einrichtungen der Versiegelungsvorrichtung gemäß der Erfindung haben Oberflächen aus Edelstahl, die zum Teil sogar elektropoliert sind, um gut zu reinigende und nicht rostende Flächen vorzusehen, die unter anderem mit dem zu verpackendem Gut in Verbindung gelangen könnten. Durch die Erfindung wird überraschend die Lösung vorgeschlagen, für den Antrieb einen Hydraulikzylinder mit Kolbenstange vorzusehen und den Antrieb mit keimfreiem Wasser zu betreiben. Es gibt Hydraulikantriebe, die mit Wasser betrieben werden, das aber nicht steril ist. Durch Zugabe von chemischen Mitteln, die preiswert zu erwerben sind, kann das übliche Wasser (zum Beispiel aus dem Wasserhahn) keimfrei gemacht werden. Es gibt zum Sterilisieren des Wassers zum Beispiel Tabletten, die Silberionen als Wirkstoff haben. Diese Tabletten entkeimen das Leitungswasser in weiten Aseptikbereichen, so daß die Anzahl Keime pro Volumeneinheit des Wassers für die aseptische Verpackung von Lebensmitteln in Packungen der hier in Rede stehenden Art ohne weiteres erreicht werden kann. Es hat sich nun gezeigt, daß der Hydraulikzylinder des benötigten Antriebes für den Backen zum Anfahren und Aufdrücken auf den Gegenbacken bestens auch mit entkeimten Wasser betrieben werden kann. Es gibt Methoden zum Messen der Keimkonzentration, so daß auch über eine längere Betriebsdauer die Keimkonzentration des erfindungsgemäß als Hydraulikflüssigkeit verwendeten Wassers gemessen und überwacht werden kann. Weitere Zugaben von Tabletten im Laufe der Zeit erlauben die Aufrechterhaltung der zulässigen Keimkonzentration. Obwohl Leckagen bei einem Hydraulikantrieb nicht auszuschließen sind, kann der Antrieb gemäß der Erfindung mit dem durch keimfreies Wasser betätigten Hydraulikzylinder auch im Reinraum angeordnet sein und also direkt den Siegelbacken gegen den Gegenbacken hin- und herbewegen, so daß der Versiegelungsvorgang im Reinraum stattfinden kann. Dadurch braucht man mit Vorteil nicht ein Sondergehäuse, und gleichwohl ist die Vorrichtung wartungsfreundlich und gewährleistet einen einwandfreien Betrieb, weil der Abstand zwischen dem eigentlichen Antrieb und dem angetriebenen Siegelbacken klein und damit die gesamte Vorrichtung recht kompakt gehalten werden kann.

Besonders vorteilhaft ist es hierbei, wenn erfindungsgemäß die Achse der mit dem Siegelbacken gekoppelten Kolbenstange in der Linie der Bewegungsrichtung liegt, welche die Hauptkraftlinie vom Antrieb über den Siegelbacken bis zum Gegenbacken ist. Damit kann man die erfindungsgemäße Versiegelungsvorrichtung nicht nur kompakt und mit großer Produktionssicherheit ausgestalten, sondern die für den Betrieb erforderliche Kraft wird von dem Hydraulikzylinder längs dieser Hauptkraftlinie auf die Achse gebracht, und alle Kräfte wirken bis vorn an die Berührungsfläche des Siegelbackens in dieser Achsrichtung. Dadurch sind keine Umlenkungen notwendig, es gehen keine Kräfte verloren, und es entstehen keine unerwünschten Toleranzen. Die Halteeinrichtungen für die gesamte bewegliche Siegeleinheit sind dadurch auch nicht belastet und leiden nicht unter Abrieb.

Zweckmäßig ist es gemäß der Erfindung ferner, wenn der Hydraulikzylinder des Antriebes über eine Kurvensteuerung fest an den Maschinenantrieb angebunden ist. Außerhalb des Reinraumes, zum Beispiel unterhalb einer großen Tischplatte der erfindungsgemäßen Vorrichtung, verläuft eine Hauptantriebswelle, auf welcher auch Kurven befestigt sind. Ventile (vorzugsweise ein positives und separat davon ein negatives) werden von dieser Kurve gesteuert und geben entsprechende Signale an den Hydraulikzylinder für die Bewegung nach vorn zur vorderen Fläche des Siegelbackens hin oder für die Bewegung nach hinten, in entgegengesetzter Richtung. Durch die Kurvensteuerung der Steuerventile erreicht man sehr kurze Steuerzeiten. Wenn nur kurze Schweiß- und andere Bewegungszeiten für die Siegeleinheit zur Verfügung stehen, erreicht man gerade durch diese beschriebene Kurvensteuerung sehr kurze Steuerzeiten. Durch das feste Anbinden des Hydraulikzylinders an den Maschinenantrieb, nämlich über die erwähnte Kurvensteuerung, wirkt diese wie ein Zwangsantrieb. Hinzu kommt nämlich der Vorteil, daß die Verwendung von Wasser als Hydraulikflüssigkeit ein Antriebsverhältnis 1:1 liefert (während Hydrauliköl beispielsweise nur ein Verhältnis von etwa 0,8 liefert). Es gibt auf diese Weise keine Verzögerungen, so daß zum Beispiel beim Einschalten auch sofort Kraft auf den Siegelbacken entwickelt wird. Bei hoher Taktzahl und niedrigen Zustellzeiten hat man auf diese Weise einen funktionssicheren Betrieb, bei dem beispielsweise der Hydraulikzylinder den Siegelbacken vorschiebt, dort unter dem erwünschten, definierten Druck eine bestimmte Zeit lang verweilen läßt, ihn dann wieder zurückzieht, während neue Packungen zum Versiegeln in den Spalt zwischen Backen und Gegenbacken eingefördert werden usw.

Für das Justieren der vorderen Flächen von Backen und Gegenbacken ist es erfindungsgemäß besonders vorteilhaft, wenn die bewegliche Siegeleinheit zwischen Antrieb und Vorderfläche des Siegelbackens an einer Halteplatte befestigt ist, die im wesentlichen parallel zur Bewegungsrichtung des Siegelbackens translatorisch beweglich am Halterahmen angeordnet ist. Diese Befestigung ist vorzugsweise lösbar und bedeutet, daß die gesamte Siegeleinheit, insbesondere der Siegelbacken, mit der Halteplatte vom Halterahmen gelöst und einstückig abgenommen werden kann. Dadurch wird die Vorrichtung wartungsfreundlich und kann gut gereinigt werden. Ferner ist der Siegelbacken durch seine integrale Verbindung mit der Halteplatte in Bewegungsrichtung des Siegelbackens justierbar, denn die ganze Einheit kann in der genannten Bewegungsrichtung translatorisch vor- und zurückbewegt werden, zum Beispiel um das richtige Spaltmaß einzustellen. Es sind nur sehr wenige Handgriffe für das Justieren in Bewegungsrichtung des Siegelbackens notwendig.

Dabei ist es günstig, wenn erfindungsgemäß die bewegliche Siegeleinheit um einen im wesentlichen vertikalen und quer zur Bewegungsrichtung des Siegelbackens angeordneten Zapfen gegenüber der Halteplatte schwenkbar ist. Das Einjustieren ist auch hinsichtlich der Parallelstellung der jeweiligen Vorderfläche des Siegelbackens einerseits und des Gegenbackens andererseits notwendig und durch diese erfindungsgemäße Maßnahme einfach möglich. Durch Lösen von (zum Beispiel vier) Schrauben läßt sich die bewegliche Siegeleinheit schnell und leicht gegenüber der Halteplatte lösen, so daß nur noch der aus der-Siegeleinheit herausstehende Zapfen die Haltefunktion übernimmt. Dieser Zapfen verläuft im wesentlichen vertikal, so daß die Siegeleinheit in einer sich daraus ergebenden etwa horizontal liegenden Ebene winkelmäßig verschwenkt werden kann. So ist es beispielsweise möglich, die Siegeleinheit translatorisch in Bewegungsrichtung nach vom zu bewegen, bis die beiden Vorderflächen von Backen und Gegenbacken aneinander liegen. Dann ist die Parallelität garantiert. in dieser Position wird dann die Siegeleinheit wieder mit der Halteplatte fest verschraubt oder anderweitig fixiert, so daß danach auch bei wiederholter translatorischer Bewegung der Halteplatte der Siegelbacken immer exakt und richtig parallel zum Gegenbacken steht. Man erkennt die sehr einfache und doch präzise Justiermöglichkeit.

Bei weiterer vorteilhafter Ausgestaltung der Erfindung ist zwischen der Kolbenstange des Antriebes und der beweglichen Siegeleinheit ein Pilzkopf zwischengeschaltet. Dieser erlaubt für das Justieren ein Entkoppeln der Siegeleinheit von ihrem Antrieb. Die Gestalt und Anwendung eines Pilzkopfes ist in anderen Bereichen an sich bekannt. Die Verwendung des Pilzkopfes bei der erfindungsgemäßen Vorrichtung zwischen Antrieb und Siegeleinheit ermöglicht einen einfachen, zuverlässigen und doch justierbaren Aufbau. Es kann dadurch jederzeit ein Achsausgleich geschaffen werden. Mit Vorteil hat die Kolbenstange des Hydraulikzylinders ein Gewinde, auf welchem der Pilzkopf aufgeschraubt ist. Eine Kontermutter kann die jeweils gewählte Position fixieren. Für die Justage, wenn die Vorderflächen der Backen zum Beispiel in Anlage zueinander gebracht werden sollen, wird die Kraft zur Bewegung der Siegeleinheit in der erwähnten Bewegungsrichtung translatorisch durch den Hydraulikzylinder des Antriebes erzeugt.

Wünscht man danach die Einstellung eines bestimmten Spaltmaßes zwischen den Vorderflächen der Backen, dann läßt sich dies durch die Drehung des erwähnten Pilzkopfes leicht erreichen.

Es ist ferner günstig, wenn erfindungsgemäß an den sich in Bewegungsrichtung des Siegelbakkens erstreckenden, gegenüberliegenden Kanten der Halteplatte im Querschnitt V-förmige Führungsschienen angebracht sind, deren V-Querschnitt sich nach außen verjüngt und die von zwei Paaren von Rollen mit entsprechender V-Form am Umfang gehalten sind, und wenn das eine Paar von Rollen zentrisch drehbar und das gegenüberliegende, andere Paar von Rollen exzentrisch drehbar am Halterahmen angeordnet sind. Bei den derzeit im Einsatz befindlichen Versiegelungsvorrichtungen gemäß der Erfindung sind die V-förmigen Führungsschienen oberflächenbehandelt und an den Kanten der Halteplatte angeschraubt. Es ist aber auch denkbar, daß man die Führungsschienen anderweitig an der Halteplatte befestigt, gegebenenfalls diese sogar mit der Halteplatte einstückig ausführt. Die - im Querschnitt gesehen - nach außen ragende Spitze der jeweiligen V-förmigen Führungsschiene ragt bei der hier beschriebenen Anordnung der Rollenpaare in den sich verjüngenden Grund des V der jeweiligen Rolle, wodurch sich eine Linienauflage ergibt. Bei jeder translatorischen Bewegung der Halteplatte in Bewegungsrichtung vor oder zurück kann etwa sich auf den Führungsschienen ansammelnder Schmutz nach vorn und hinten verschoben werden. Diese Linienauflage zwischen Rolle und Führungsschiene sorgt dafür, daß der unerwünschte Schmutz vor der jeweiligen Rolle bis zur Endposition hergeschoben wird. Beim Rücklauf der Rolle relativ zur Führungsschiene bleibt der Schmutz in der vorgeschobenen Position haften und kann sehr leicht abgewischt werden. Auch hier zeigen sich an notwendigen, kritischen Stellen (zwischen fest und beweglich, bei der Justage) die guten Reinigungsmöglichkeiten und damit Bedingungen für die Verwendung im Reinraum.

Die zentrisch drehbare Anordnung des einen Rollenpaares gegenüber der exzentrisch drehbaren Anordnung des anderen Rollenpaares auf der gegenüberliegenden Seite der Halteplatte ermöglicht mit weiterem Vorteil ein Feststellen bzw. eine Erhöhung der Friktion zwischen den Rollenpaaren und den Führungsschienen beim Festdrehen und Lockern beim Losdrehen. Durch eine einfache Drehung der exzentrisch gelagerten Rolle wird die Halteplatte stärker gegen die Rollen gedrückt mit der Folge einer erhöhten Friktion. Durch die Drehung der jeweiligen exzentrischen Rolle erreicht man auf einfachste Weise eine gewünschte Vorspannung.

Erfindungsgemäß kann auch wenigstens eine der V-förmigen Führungsschienen etwa im mittleren Bereich ihrer Längserstreckung von einer Ausnehmung unterbrochen sein. Im Bereich dieser sich in Schienenrichtung erstreckenden Ausnehmung fehlt sozusagen das V-förmig erhabene Profil der Schiene. Die Länge der Ausnehmung wird in zweckmäßiger Weise etwas größer als der Durchmesser der jeweils verwendeten Rolle gewählt. Zweck dieser Maßnahme ist das leichte Entnehmen der beweglichen Siegeleinheit, ohne etwa die Rollen vollständig abnehmen zu müssen. Man wird nämlich die beiden Rollen eines Paares in einem Abstand voneinander anordnen, der etwa so groß wie die Längserstreckung der Halteplatte (in Bewegungsrichtung des Siegelbackens) ist. Der Abstand der Achse der einen Rolle zur Mitte der erwähnten Ausnehmung wird dann so groß gewählt wie diejenige Wegstrecke längs der Führungsschiene, welche die jeweils andere Rolle vom Ende der Führungsschiene entfernt ist mit der Folge, daß beim Hereinbewegen der Rolle (Relativbewegung, denn es wird immer die Halteplatte gegenüber der festgelagerten Rolle bewegt) in die Ausnehmung dann gleichzeitig die andere Rolle über das Ende der Führungsschiene hinausläuft, so daß schließlich beide Rollen von dem V-förmigen Querschnitt der Führungsschiene außer Eingriff sind und die Halteplatte mit der ganzen daran angeordneten (beweglichen) Siegeleinheit von den Rollen abgenommen werden kann. Die Rollen sind dabei in zweckmäßiger Weise am Halterahmen drehbar befestigt. Wiederum wird die Wartungsfreundlichkeit und gute Reinigungsmöglichkeit der einzelnen Einheiten der Versiegelungsvorrichtung gemäß der Erfindung erkennbar.

Besonders günstig ist es dabei, wenn erfindungsgemäß der Siegelbacken als Ultraschallsonotrode ausgebildet ist, die fest mit einem an der Halteplatte befestigten Konverter verbunden ist, und wenn der Gegenbacken als Amboß ausgebildet ist. Die Ultraschallversiegelung hat man bisher nur im nicht aseptischen Bereich bei dem Verschließen von Giebelpackungen eingesetzt. Durch die erfindungsgemäßen Maßnahmen und Randbedingungen kann aber die Siegeleinheit auch eine Sonotrode aufweisen.

Für eine Zwangssteuerung der Siegeleinheit könnte man eine Pneumatik einsetzen, deren Verwendung aber durch die Bedingungen des Reinraumes nicht möglich erscheinen. Da man für das Versiegeln der Verschlußnaht einen exakten Druck benötigt, braucht man auf der Seite des Gegenbackens bzw. des Ambosses eine Abfederung, ein Federelement, zum Beispiel ein pneumatisches Druckkissen. Das aber kann nur pneumatisch oder hydraulisch aufgebaut werden. Unter anderem durch die Materialien und die Leckagen hat man bislang weder eine Pneumatik noch eine Hydraulik im Reinraum eingesetzt. Durch die Verwendung von keimfreiem Wasser als Hydraulikflüssigkeit kann der Antrieb aber auch im Reinraum angeordnet werden. Es sind mit Vorteil die Heißluftströme zum Sterilisieren nicht mehr erforderlich. Die Oberflächen der erfindungsgemäßen Versiegelungsvorrichtung können durch Säuren sterilisiert werden, die Säuren können durch Wasser abgewachen werden, und wichtige Keimträger, wie zum Beispiel die beim Stand der Technik verwendete Heißluft, braucht man-im Reinraum der erfindungsgemäßen Vorrichtung nicht mehr zu verwenden.

Weitere Vorteile, Merkmale und Anwendungsmöglichkeiten der vorliegenden Erfindung ergeben sich aus der folgenden Beschreibung in Verbindung mit den anliegenden Zeichnungen. Es zeigen:
- Figur 1: perspektivisch den Rahmen der Versiegelungseinrichtung mit Siegelbacken und Gegenbacken,
- Figur 2: eine Seitenansicht, wenn man in Figur 1 von rechts unten nach links oben blickt,
- Figur 3: eine ähnliche Ansicht wie Figur 2, wobei jedoch der Rahmen und wesentliche andere Teile im Schnitt dargestellt sind,
- Figur 4: teilweise im Schnitt die Draufsicht auf den Siegelbacken und Gegenbacken entlang der Linie IV-IV in Figur 3,
- Figur 5: eine vergrößerte, abgebrochene Ansicht auf den Antrieb mit dem Pilzkopf entlang der Linie V-V der Figur 3 und
- Figur 6: eine Draufsicht auf den Rahmen mit den darunter nur teilweise sichtbaren Versiegelungseinrichtungen, wenn man zum Beispiel in Figur 2 von oben nach unten blickt.

Der zur Versteifung dreischienige Halterahmen 1 haltert die gesamte Vorrichtung und hier insbesondere den als Ultraschallsonotrode ausgebildeten Siegelbacken und den als Amboß 3 ausgebildeten Gegenbacken. Mit der Sonotrode 2 ist ein Konverter 4 verbunden. Die Sonotrode 2 mit Konverter 4 ist unter dem Halterahmen 1 über eine Halteplatte 5 angebracht. Infolgedessen sind die Sonotrode 2 und der Konverter 4 in der mit 6 bezeichneten Bewegungsrichtung bewegbar, weshalb diese bewegliche Einheit insgesamt als die bewegliche Siegeleinheit 7 bezeichnet ist.

Dieser gegenüber ist der Antrieb 8 in Form eines Hydraulikzylinders fest am Halterahmen angebracht. Dessen Kolbenstange 9 kann die bewegliche Siegeleinheit 7 in Richtung des Doppelpfeiles 6, d.h. der Bewegungsrichtung der Einheit 7 nach vor und zurück bewegen.

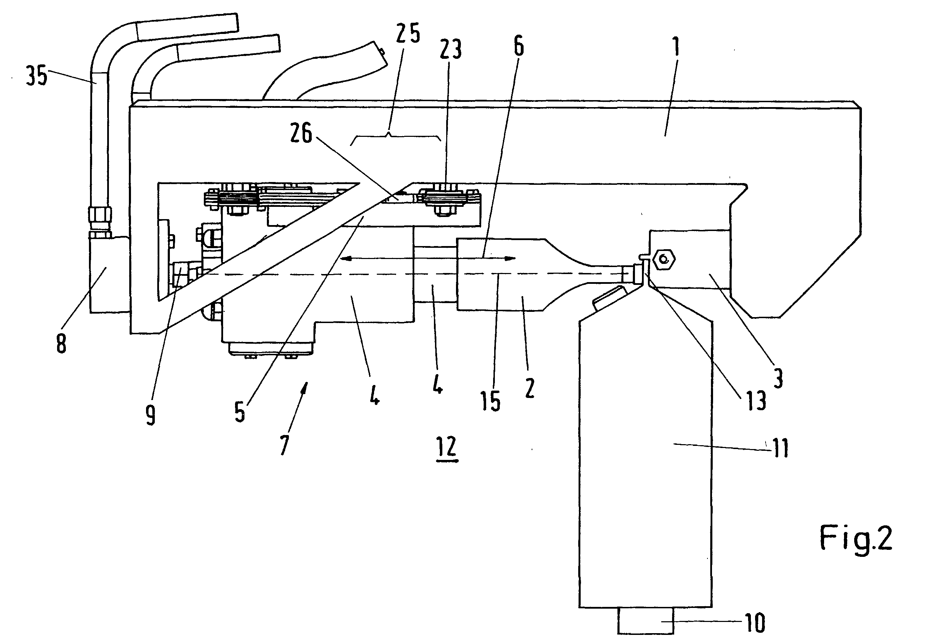

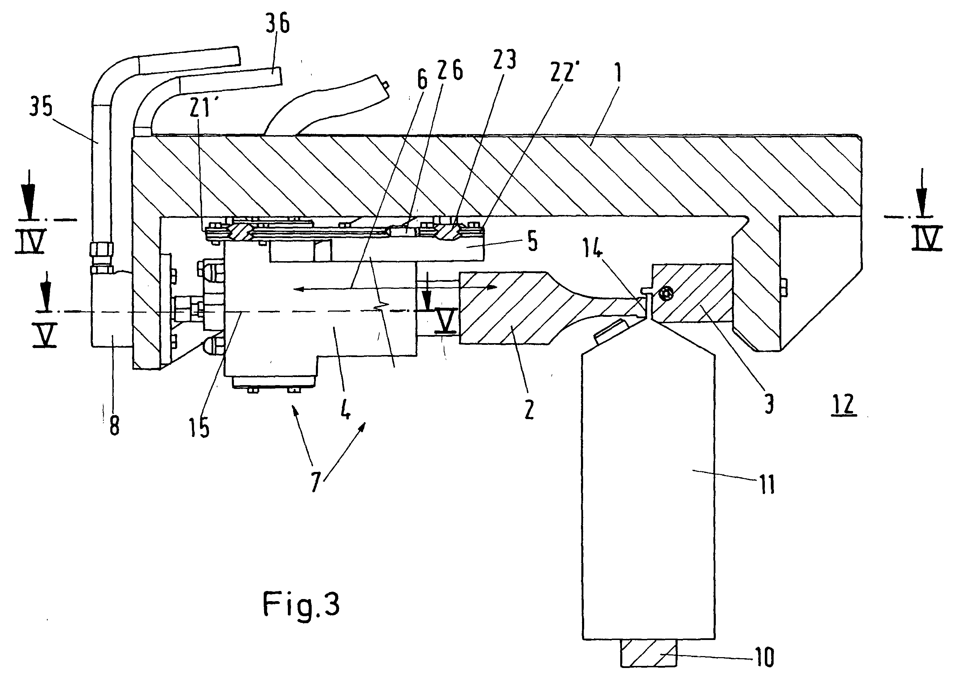

Alle in den Zeichnungen hier dargestellten Teile, einschließlich des Halterahmens 1 und der Bodenschiene 10 für die Packung 11 befinden sich In einem nach außen nicht begrenzt dargestellten Reinraum 12. In diesem soll die Verschlußnaht 13 der keimfrei befüllten Packung 11 versiegelt werden. Diese Packung ist eine aus mit Kunststoff beschichtetem Papier hergestellte Giebelpackung, deren Giebel in den Figuren 2 und 3 "oben" liegend über bzw. gegenüber der Bodenschiene 10 angeordnet gezeigt ist. In den Figuren 2 und 3 sieht man, wie gerade die Ultraschallsonotrode 2 mit ihrer Vorderfläche 14 gegen die Verschlußnaht 13 der Packung 11 angefahren ist. Dabei erfolgte die durch den Antrieb 8 bewirkte Bewegung der beweglichen Siegeleinheit 7 in den Figuren 2 und 3 nach der rechten Hälfte des Doppelpfeiles 6, also eine Bewegung nach rechts zum Gegenbacken bzw. Amboß 3 hin. Die Achse der Kolbenstange 9 liegt in der Linie der Bewegungsrichtung 6, und diese Linie stellt die Hauptkraftlinie 15 vom Antrieb 8 einerseits über den Siegelbacken 2 bis zum Gegenbacken 3 dar.

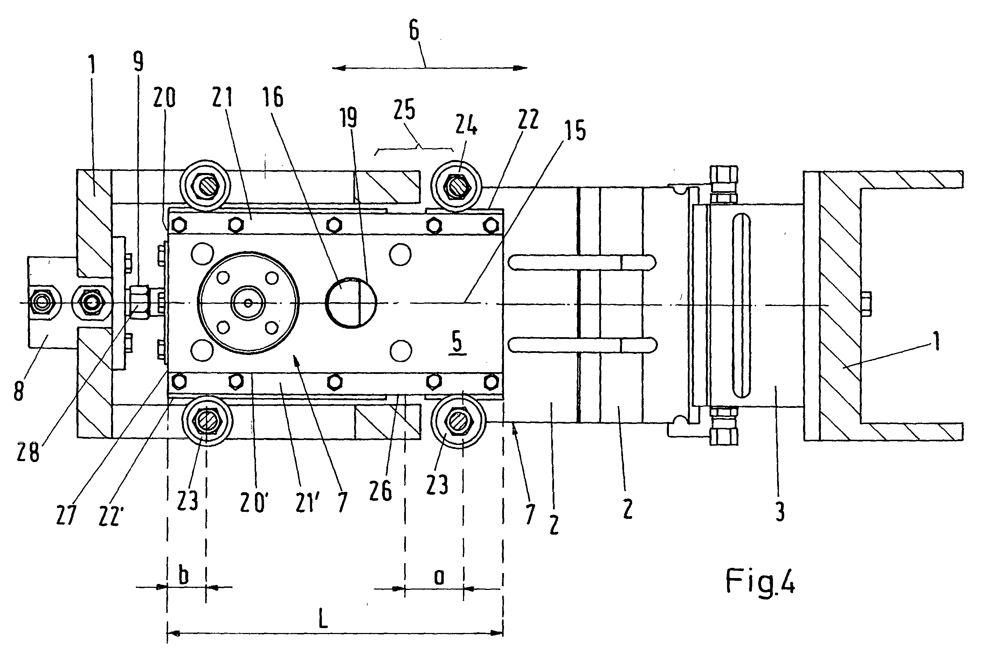

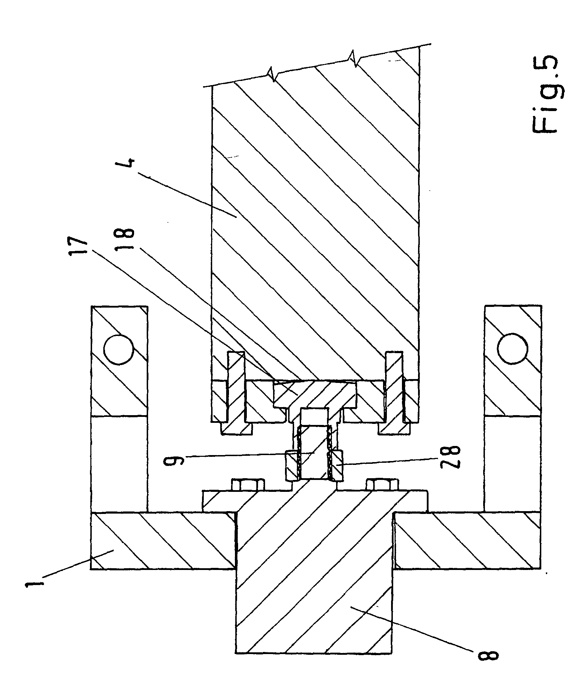

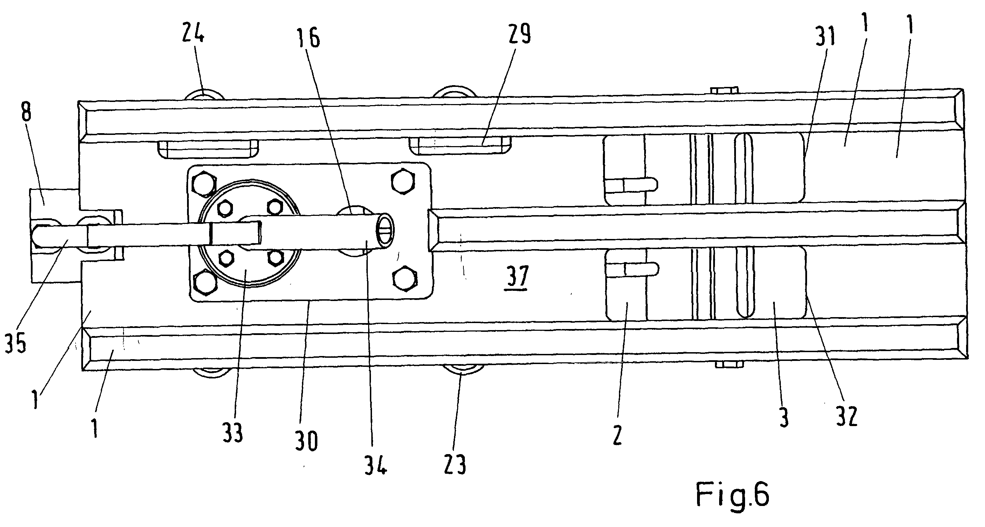

Die bewegliche Siegeleinheit 7 ist aber nicht nur ausschließlich längs dieser Hauptkraftlinie 15 in Bewegungsrichtung 6 translatorisch vor- und zurückbewegbar. Vielmehr gibt es auch eine Drehbeweglichkeit dieser Siegeleinheit 7, nämlich um einen, in den Figuren 4 und 6 deutlich sichtbaren Zapfen 16, dessen Drehachse auf der Hauptkraftlinie 15 und auf einer Ebene senkrecht steht, die in der Hauptkraftlinie 15 liegt und bei der Darstellung der Figuren 4 bis 6 die Papierebene ist. Im Hinblick auf die Figuren 2 und 3 liegt diese Ebene in Blickrichtung und enthält wieder die Hauptkraftlinie 15. Damit eine Anpassung dieser somit auch drehbeweglichen Siegeleinheit 7 an die Achse der Kolbenstange 9 des am Halterahmen 1 befestigten Antriebes 8 möglich ist, ist gemäß Darstellung der Figur 5 am vordersten (in Figur 5 rechten) Ende der Kolbenstange 9 ein Pilzkopf 17 angebracht. Dessen Vorderfläche 18 gleicht eine Knickung der Hauptkraftlinie 15 zur Kolbenstange 9 hin aus. Dadurch wird tatsächlich die Kraft von dem Antrieb 8 ohne Knickung direkt auf die Vorderfläche 14 der Sonotrode 2 und damit auch auf den Amboß 3 übertragen.

Der Zapfen 16 ist an der beweglichen Siegeleinheit 7 befestigt und ragt aus dieser nach oben in Richtung auf den Halterahmen 1 heraus und in eine Bohrung 19 in der Halteplatte 5 hinein. Der Zapfen 16 endet in dieser Bohrung 19 in der Halteplatte 5. Die Siegeleinheit 7 kann sich also um den Zapfen 16 relativ zur Halteplatte 5 drehen. Die Halteplatte 5 ihrerseits ist nur relativ zum Halterahmen 1 translatorisch in Richtung des Doppelpfeiles 6 bewegbar.

Hierfür hat man an den sich in Bewegungsrichtung 6 erstreckenden und gegenüberliegenden Kanten 20, 20' Führungsschienen 21, 21' angeschraubt. Deren Querschnitt ist V-förmig derart, daß sich die Außenkanten dieser Führungsschienen 21, 21' nach außen verjüngen. Die Führungsschienen laufen also (wie am Grund eines V an der Spitze) nach außen in der mit 22, 22' bezeichneten Außenkante aus.

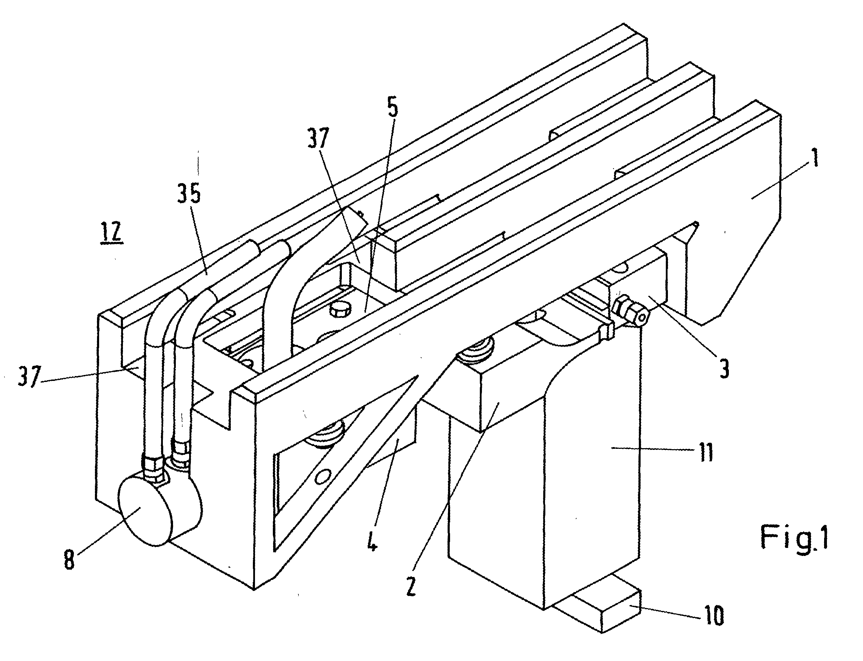

In Figur 4 erkennt man die Befestigung der beweglichen Halteplatte 5 mittels eines ersten unteren Paares von Rollen 23, die drehbar am Halterahmen 1 oben (siehe Figuren 2 und 3) angeordnet sind; sowie gegenüber am anderen Ende des Halterahmens, in den Figuren 4 und 6 oben ein zweites oberes Paar von Rollen 24, die aber ersichtlich exzentrisch angeordnet sind. Anhand der Figuren 2 und 3 sieht man den entsprechend dem V-Profil der Führungsschienen 21, 21' ausgestalteten V-Querschnitt der Rollen 23. Auch die gegenüberliegenden Rollen 24 haben am Umfang eine entsprechende V-Form. Das in den Figuren 1 bis 3 vordere und in den Figuren 4und 6 unten liegend angeordnete Paar von Rollen 23 ist zentrisch drehbar angeordnet, während das gegenüberliegende zweite obere Paar von Rollen 24 exzentrisch am Halterahmen 1 drehbar angeordnet ist.

Für eine gute Reinigung erhält man durch das erwähnte V-Profil eine Linienauflage, also eine Linienführung, die auch ohne Schmiermittel funktioniert. Etwa sich doch auf den Führungsschienen 21, 21' ansammelnder Schmutz wird durch die Rollenpaare 23, 24 bei jeder translatorischen Bewegung in Richtung des Doppelpfeiles 6 nach vorn bzw. nach hinten geschoben, wo der Schmutz dann leicht entfernt werden kann.

Die Wartungsfreundlichkeit des gesamten Aufbaues der Versiegelungsvorrichtung wird auch in folgender Einzelheit besonders deutlich. Die beiden im Querschnitt V-förmigen Führungsschienen 21, 21' sind gemäß deutlicher Darstellung insbesondere in den Figuren 2 bis 4 im Bereich 25, welches der mittlere Bereich sein könnte, bei dieser Ausführungsform hier aber der Bereich im rechten Drittel ist, Ausnehmungen 26 vorgesehen. Es sind also die Führungsschienen 21, 21' in diesem Bereich 25 unterbrochen. Es fehlt sozusagen die V-förmige Kante zur Führung der Rollen 23, 24 mit der Folge, daß beim Verschieben der Halteplatte 5 in Bewegungsrichtung 6, wenn zum Beispiel die in Figur 4 rechten Rollen 23, 24 in diese Ausnehmung 26 kommen, die Halteplatte 5 dann von diesen rechten Rollen 23, 24, nicht mehr gehalten ist, sondern vielmehr trotz Vorhandensein der Rollen 23, 24 von diesen außer Eingriff genommen werden kann.

Der Abstand a zwischen der Mitte der rechten vorderen Außenkante 22 bzw. 22' der Führungsschiene 21 bzw. 21' und der Mitte der Ausnehmung 26 ist größer als der Abstand b zwischen der Achse der unteren linken Rolle 23 (Figur 4) und der rückwärtigen Endkante 27 der Halteplatte 5. Dabei ist die Gesamtlänge der Halteplatte 5 mit L angenommen. Bei einem Beispiel kann L = 100 mm sein, während a = 5 mm und b = ≤ 5 mm. Dadurch wird erreicht, daß nach dem Lösen der Kontermutter 28 für das Entkuppeln der Kolbenstange 9 von dem Pilzkopf 17 (Figur 5), d.h. nach dem Lösen der abtriebsseitigen Teile der Halteplatte 5, wie zum Beispiel des Pilzkopfes 17, vom Antrieb 8 und der Kolbenstange 9, ein Verschieben der Halteplatte 5 zum Beispiel nach rechts in Richtung auf den Amboß 3 hin um die Strecke a ausreicht, um die hintere Endkante 27 der Halteplatte 5 vor die jeweils hintere Rolle des oberen Rollenpaares 24 und auch des unteren Rollenpaares 23 zu bringen, während gleichzeitig die Ausnehmung 26 in den Bereich der vorderen Rollen der beiden Paare 23, 24 zu liegen kommt mit dem Ergebnis, daß man die Halteplatte herausnehmen kann, ohne die zentrisch oder die exzentrisch angeordneten Paare von Rollen 23, 24 zu lösen. Das erhöht erheblich die Produktionssicherheit und auch die Wartungsfreundlichkeit. Die Halteplatte 5 läuft belastungsfrei zwischen den Paaren von Rollen 23, 24.

Um die in den Figuren links bzw. vorn angeordnete vordere Endfläche des als Amboß ausgebildeten Gegenbackens 3 exakt, parallel und flächig mit der Vorderfläche 14 des als Sonotrode ausgebildeten Siegelbackens 2 mit dazwischen angeordneter Verschlußnaht 13 der Packung 11 in Position zu bringen, muß man die bewegliche Siegeleinheit 7 relativ zum Amboß 3 bewegen. So wird zuerst die Verschlußnaht 13 der Packung 11 an den Amboß angelegt, dann wird die Siegeleinheit 7 in Richtung des Doppelpfeiles nach rechts auf den Amboß 3 hin bewegt (mit Hilfe des Antriebes 8 und seines mit sterilem Wasser angetriebenen Hydraulikzylinders), und schließlich wird durch Lösen der Kupplung zwischen Antrieb 8 und Pilzkopf 17 eine Verschwenkmöglichkeit der Siegeleinheit 7 über den Zapfen 16 relativ zur Halteplatte 5 geschaffen und die Siegeleinheit 7 solange gedreht, bis die Vorderfläche 14 der Sonotrode 2 parallel zum Amboß 3 liegt. Dann können alle Kupplungen bzw. Verschraubungen wieder festgezogen werden, so daß in dieser einjustierten Stellung die Siegeleinheit 7 wieder fest an der Halteplatte 5 angebracht wird und diese gesamte Einheit von Halteplatte 5 und Siegeleinheit 7 wieder mit dem Antrieb 8 bzw. der Kolbenstange 9 fest verkuppelt wird. Sollte der Anpreßdruck des einen Paares von Rollen 23 gegenüber dem anderen 24 nicht ausreichen, dann können über die Ausnehmungen 29 im Rahmen (Figur 6) die exzentrisch angeordneten oberen Rollen 24 gelöst und anders eingestellt werden. In Figur 6 sieht man ferner in der Draufsicht auf den Rahmen 1 die kastenförmigen Grenzlinien 30, 31 und 32 dreier Reinigungsöffnungen. Mit 33 ist der Flansch für den Versorgungsschlauch 34 für den Konverter 4 bezeichnet. In den Figuren sind auch die Zu-35 und Abführschläuche 36 für den Hydraulikzylinder des Antriebes 8 gezeigt. Die in Figur 6 mit 37 bezeichnete Fläche im Rahmen 1 zwischen den Grenzlinien 30, 31, 32 der Reinigungsöffnungen ist eine Zwischenebene, die man perspektivisch sehr gut auch in Figur 1 sieht.

Die Einleitung der Vorschub- und Rückschubkraft auf die bewegliche Siegeleinheit 7 entlang den beiden Bewegungsrichtungen 6 nach vorn zum Amboß 3 hin und nach zurück von diesem fort erfolgt mittels der erwähnten Wasserhydraulik. Durch die Verwendung von sterilem Wasser ist die Verkeimung der Umgebung (die anderenfalls durch Hydraulikölleckagen zu befürchten wäre) im Sterilbereich ausgeschlossen. Der Hydraulikzylinder des Antriebes 8 ist gemäß besonders deutlicher Darstellung in Figur 5 direkt an den Konverter 4 angeschlossen, und dieser läuft auf den im Querschnitt V-förmigen Führungsschienen 21, 21'. Der erwähnte Vorschub mittels Antrieb 8 erzeugt den tatsächlichen Schweißhub. Man kann auf mechanische Teile oder Umlenkelemente mit Vorteil verzichten, weil die Einleitung der Hydraulikkraft vom Antrieb 8 entlang der Hauptkraftlinie 15 direkt in die Schweißzone erfolgt.

### Bezugszeichenliste

- 1: Halterahmen
- 2: Siegelbacken Sonotrode
- 3: Gegenbacken, Amboß
- 4: Konverter
- 5: halteplatte
- 6: Bewegungsrichtung
- 7: bewegliche Siegeleinhiet
- 8: Antrieb mit Hydraulikzylinder
- 9: Kolbenstange
- 10: Bodenschiene
- 11: Packung
- 12: Reinraum
- 13: Verschlußnaht
- 14: Vorderfläche der Sonotrode 2
- 15: Hauptkraftlinie
- 16: Zapfen
- 17: Pilzkopf
- 18: Vorderfläche des Pilzkopfes
- 19: Bohrung in der Halteplatte
- 20,20': Kanten
- 21,21': Führungsschienen
- 22,22': Außenkante der Führungsschiene 21, 21'
- 23: erstes unteres Paar von Rollen
- 24: zweites oberes Paar von Rollen
- 25: mittlerer Bereich der Führungsschienen 21, 21'
- 26: Ausnehmung in den Führungsschienen 21, 21'
- 27: hintere Endkante der Halteplatte 5
- 28: Kontermutter
- 29: Ausnehmung
- 30, 31, 32: Grenzlinien dreier Reinigungsöffnungen
- 33: Flansch
- 34: Versorgungsschlauch
- 35: Zuführschlauch
- 36: Abführschlauch
- 37: Zwischenebene

## Patentansprüche

1. Vorrichtung zum Versiegeln der Verschlußnaht (13) einer keimfrei befüllten Packung (11), bei der in Bewegungsrichtung (6) eines Siegelbackens (2) hinter letzterem ein Antrieb (8) mit diesem gekoppelt und stationär an einem Halterahmen (1) angebracht ist, eine mit dem Siegelbacken (2) gekoppelte Kolbenstange (9) aufweist und vor dem Siegelbacken (2) in Bewegungsrichtung (6) ein Gegenbacken (3) angeordnet ist, **dadurch gekennzeichnet, daß** sowohl die Vorrichtung zum Endversiegeln unter keimfreien Bedingungen mit Siegelbacken (2) und Gegenbacken (3) als auch der Antrieb (8) in einem Reinraum (12) angeordnet sind und
der Antrieb (8) einen Hydraulikzylinder aufweist, der mit keimfreiem Wasser als Hydraulikflüssigkeit betrieben ist und doppelt wirkend arbeitet.

2. Vorrichtung nach Anspruch 1, **dadurch gekennzeichnet, daß** die Achse der Kolbenstange (9) in der Linie der Bewegungsrichtung (6) liegt, welche die Hauptkraftlinie (15) vom Antrieb (8) über den Siegelbacken (2) bis zum Gegenbacken (3) ist.

3. Vorrichtung nach Anspruch 1 oder 2, **dadurch gekennzeichnet, daß** der Hydraulikzylinder des Antriebes (8) über eine Kurvensteuerung seiner Steuerventile fest an den Maschinenantrieb angebunden ist.

4. Vorrichtung nach einem der Ansprüche 1 bis 3, **dadurch gekennzeichnet, daß** die bewegliche Siegeleinheit (7) zwischen Antrieb (8) und Vorderfläche (14) des Siegelbackens (2) an einer Halteplatte (5) befestigt ist, die im wesentlichen parallel zur Bewegungsrichtung (6) des Siegelbackens (2) translatorisch beweglich am Halterahmen (1) angeordnet ist.

5. Vorrichtung nach einem der Ansprüche 1 bis 4, **dadurch gekennzeichnet, daß** die bewegliche Siegeleinheit (7) um einen im wesentlichen vertikalen und quer zur Bewegungsrichtung (6) des Siegelbackens (2) angeordneten Zapfen (16) gegenüber der Halteplatte (5) schwenkbar ist.

6. Vorrichtung nach einem der Ansprüche 1 bis 5, **dadurch gekennzeichnet, daß** zwischen der Kolbenstange (9) des Antriebes (8) und der beweglichen Siegeleinheit (7) ein Pilzkopf (17) zwischengeschaltet ist.

7. Vorrichtung nach einem der Ansprüche 1 bis 6, **dadurch gekennzeichnet, daß** an den sich in Bewegungsrichtung (6) des Siegelbackens (2) erstreckenden, gegenüberliegenden Kanten (20,20') der Halteplatte (5) im Querschnitt V-förmige Führungsschienen (21,21') angebracht sind, deren V-Querschnitt sich nach außen verjüngt und die von zwei Paaren von Rollen (23, 24) mit entsprechender V-Form am Umfang gehalten sind, und daß das eine Paar von Rollen (23) zentrisch drehbar und das gegenüberliegende andere Paar (24) von Rollen exzentrisch drehbar am Halterahmen (1) angeordnet sind.

8. Vorrichtung nach einem der Ansprüche 1 bis 7, **dadurch gekennzeichnet, daß** wenigstens eine V-förmige Führungsschiene (21, 21') etwa im mittleren Bereich (25) ihrer Längserstreckung von einer Ausnehmung (26) unterbrochen ist.

9. Vorrichtung nach einem der Ansprüche 1 bis 8, **dadurch gekennzeichnet, daß** der Siegelbacken (2) als Ultraschallsonotrode (2) ausgebildet ist, die fest mit einem an der Halteplatte (5) befestigten Konverter (4) verbunden ist, und daß der Gegenbacken (3) als Amboß (3) ausgebildet ist.

## Claims

1. Device for sealing the closing seam (13) of a germ-free filled package (11), in which, in the direction of movement (6) of a sealing jaw (2), behind said jaw a drive means (8) is connected thereto and is fixed in a stationary manner to a retaining frame (1), is provided with piston rod (9) coupled to the sealing jaw (9) and is arranged in front of the sealing jaw (2) in the direction of movement (6) of a counter jaw (3), **characterised in that** both the device for final sealing in germ-free conditions with sealing jaw (2) and counter jaw (3) and the drive (8) are arranged in a clean room (12), and the drive means (8) is provided with a hydraulic cylinder, which is operated using germ-free water as the hydraulic fluid, and operates with a dual effect.

2. Device according to claim 1, **characterised in that** the axis of the piston rod (9) lies in the line of the direction of movement (6) which is the principal line of force (15) from the drive means (8) via the sealing jaw (2) to the counter jaw (3).

3. Device according to claim 1, **characterised in that** the hydraulic cylinder of the drive means (8) is securely fixed to the machine drive by means of a cam control of its control valves.

4. Device according to one of claims 1 to 3, **characterised in that** the moveable sealing unit (7) is fitted between the drive means (8) and the front surface (14) of the sealing means (2) onto a retaining plate (5) arranged to be moveable on the retaining frame (1) in a translatory manner substantially parallel to the direction of movement (6) of the sealing jaw (2).

5. Device according to one of claims 1 to 4, **characterised in that** the moveable sealing unit (7) is pivotable with respect to the retaining plate (5) about a pin (16) arranged substantially vertical and at right angles with respect to the direction of movement (6) of the sealing jaw (2).

6. Device according to one of claims 1 to 5, **characterised in that** a mushroom (17) is interposed between the piston rod (9) of the drive means (8) and the moveable sealing unit (7).

7. Device according to one of claims 1 to 6, **characterised in that** guide rails (21, 21') with a V-shaped cross-section are fitted to opposite edges (20, 20') of the retaining plate (5) extending in the direction of movement (6) of the sealing jaw (2), the V cross-section of which tapers towards the outside and which are held by two pairs of rollers (23, 24) with a corresponding V-shape on the periphery, and that one pair of rollers (23) is arranged centrically rotatable on the retaining frame (1) and the opposite, other pair (24) of rollers are eccentrically rotatable.

8. Device according to one of claims 1 to 7, **characterised in that** at least one V-shaped guide rails (21, 21') is interrupted approximately in the central area (25) of its longitudinal extent by a cut-out (26).

9. Device according to one of claims 1 to 8, **characterised in that** the sealing jaw (2) is configured as an ultrasound sonotrode (2) which is securely connected to a converter (4) fixed to the retaining plate (5), and that the counter jaw (3) is configured as an anvil (3).

## Revendications

1. Appareillage pour le scellage du cordon d'obturation (13) d'un emballage (11) rempli dans des conditions stériles, dans lequel un organe d'entraînement (8), situé en arrière d'une mâchoire de scellage (2) dans le sens de déplacement (6) de cette mâchoire, est couplé à cette mâchoire de scellage et est rapporté d'une manière fixe à un cadre (1), comporte une tige de piston (9) couplée à la mâchoire de scellage (2), une contre-mâchoire (3) étant disposée en avant de la mâchoire de scellage (2) dans le sens de déplacement (6), **caractérisé en ce que** tant l'appareillage destiné au scellage final dans des conditions stériles avec la mâchoire de scellage (2) et la contre-mâchoire (3), que l'organe d'entraînement (8), sont disposés dans une salle blanche, et que l'organe d'entraînement (8) comporte un vérin hydraulique, qui est entraîné par de l'eau stérile servant de liquide hydraulique, et travaille en double effet.

2. Appareillage selon la revendication 1, **caractérisé en ce que** l'axe de la tige de piston (9) se trouve dans la ligne du sens de déplacement (6) qui est la ligne de force principale (15) allant de l'organe d'entraînement (8) à la contre-mâchoire (3) en passant par la mâchoire de scellage (2).

3. Appareillage selon la revendication 1 ou 2, **caractérisé en ce que** le vérin hydraulique de l'organe d'entraînement (8) est relié à demeure à l'organe d'entraînement de la machine par l'intermédiaire d'une commande par came de ses soupapes de commande.

4. Appareillage selon l'une des revendications 1 à 3, **caractérisé en ce que** l'unité de scellage mobile (7) est, entre l'organe d'entraînement (8) et la face frontale (14) de la mâchoire de scellage (2), fixée à une plaque de retenue (5) qui est disposée de façon à pouvoir subir un mouvement de translation, pour l'essentiel parallèle au sens de déplacement (6) de la mâchoire de scellage (2), sur le cadre (1).

5. Appareillage selon l'une des revendications 1 à 4, **caractérisé en ce que** l'unité mobile de scellage (7) peut pivoter par rapport à la plaque de retenue (5) autour d'un pivot (16), essentiellement vertical et disposé transversalement par rapport au sens de déplacement (6) de la mâchoire de scellage (2).

6. Appareillage selon l'une des revendications 1 à 5, **caractérisé en ce qu'**une tête de champignon (17) est intercalée entre la tige de piston (9) de l'organe d'entraînement (8) et l'unité mobile de scellage (7).

7. Appareillage selon l'une des revendications 1 à 6, **caractérisé en ce que** des rails de guidage (21, 21') ayant en section transversale la forme d'un V, sont rapportés aux arêtes opposées (20, 20'), s'étendant dans le sens de déplacement (6) de la mâchoire de scellage (2), de la plaque de retenue (5), rails de guidage dont la section transversale en V se rétrécit vers l'extérieur, et qui sont retenus sur leur périphérie par deux paires de rouleaux (23, 24), ayant une forme correspondante en V, et **en ce qu'**une paire de rouleaux (23) sont disposés contre le cadre (1) de façon à pouvoir subir une rotation centrée, et l'autre paire opposée (24) de rouleaux sont disposés de façon à pouvoir subir une rotation excentrée.

8. Appareillage selon l'une des revendications 1 à 7, **caractérisé en ce qu'**au moins un rail de guidage (21, 21') en forme de V est, approximativement dans la zone centrale (25) de son extension longitudinale, interrompu par un évidement (26).

9. Appareillage selon l'une des revendications 1 à 8, **caractérisé en ce que** la mâchoire de scellage (2) est configurée comme une sonotrode à ultrasons (2), qui est reliée à demeure à un convertisseur (4) fixé à la plaque de retenue (5), et **en ce que** la contre-mâchoire (3) est configurée comme une enclume (3).
